# EUROPEAN PATENT APPLICATION

(11) **EP 1 965 563 A2**
(43) Date of publication of application: **03.09.2008**
(21) Application number: 08101087.8
(22) Date of filing: 30.01.2008
(51) Int. Cl.: H04L 29/06

(54) **System and method for mediation of user attention for presentational media**

(30) Priority: 01.03.2007 US 680853
(71) Applicant: Mitel Networks Corporation, Ottawa, Ontario K2K 2W7 (CA)
(72) Inventor: Couse, Peter Francis, Ottawa Ontario K2C 0G5 (CA); Gray, Thomas A., Mansfield Québec J0X 1V0 (CA)
(74) Representative: Pisani, Diana Jean

(57) **Abstract**

A system and method are provided for mediating a user's attention between multiple presentational media, comprising a streaming media application for providing the user with a stream of media, a notification system for generating a notification of an interruption, and a streaming media manager for receiving the notification and in response causing the streaming media application to one of either automatically pause or bookmark the stream of media to facilitate continuation of the stream of media after the interruption.

## Description

### Field of the Invention

The present invention relates in general to communication systems, and more particularly to a system and method for mediating a user's attention between multiple presentational media.

### Background of the Invention

Current developments in multimedia communications offer great opportunities for new types of work practice. Users are able to use multiple modalities to access information and to interact with their colleagues. For example, synchronous applications such as VoIP allow real-time conversations between colleagues. Asynchronous applications such as Email and voice mail allow interactions to take place over time and semi-synchronous applications such as Instant Messaging (IM) allow interactions to take place almost in real-time.

The benefits of these various applications are related, in part, to the degree of attention that a user can pay to an application at any given time. Synchronous applications such as VoIP require almost the full measure of a user's attention whereas asynchronous interactions such as Email can be attended to at a lower level of attention. Thus, a busy user with a finite degree of attention will partition matters based on his/her degree of attention. Urgent and important matters typically require the user's full attention. Thus, the use of a modality such as VoIP is justified for such matters. Less important matters impose a lower demand on the user's attention and can therefore be taken up when more important matters are not currently salient. Email, which can be attended to at will, is well suited to such matters.

Thus, a typical user will partition his/her attention over the course of a day among various matters using modalities suited to the degree of attention that their importance justifies.

A new generation of presentational applications that use streaming, make user partitioning of attention among multiple modalities much more difficult. Such presentational applications include web-based tutorials and media attachments to Email, either of which may be full multi-media presentations such as web-based tutorials or single media presentations such as audio/video recordings of annual general meetings. These presentations cannot be classified as secondary; such as background music, but when accessed demand the user's full attentions. However as indicated above, the accessing of these materials may be interrupted by more urgent matters. A stock analyst accessing a recording of an annual general meeting can be interrupted by an urgent call from a client. An engineer viewing a web-based tutorial can be interrupted by a notification from his personal electronic diary that he has to go to a meeting.

Currently, the user has to mute or manually stop or pause a streaming media presentation when such an interruption occurs. Dealing with such interruptions as a ringing telephone while controlling a streaming media application at the same time is awkward. As a result, the streaming media will often play on while the user is distracted with the result that once the user is able to return his/her attention to the streaming media presentation he/she must search for the place in the presentation where his/her attention was interrupted.

The inventors have recognized the desirability of providing a mechanism for controlling various applications and systems that disturb a user's attention so that applications such as presentations can be resumed without the user being required to search.

It is known in the prior art to assess a user's current context for the purpose of determining whether a proposed communication is important enough to warrant interrupt of his/her attention (see US Patent 6,363,140, entitled Dialable Screening, by Pinard , the contents of which are incorporated herein by reference). Aspects of the user's current content may include location and role relationships. US Patent Publication 2005/0100157 entitled Context Aware Call Handling System, by Gray et al, the contents of which are incorporated herein by reference, discloses various types of reasoning to determine user context for the purpose of selecting a most appropriate user policy for handling incoming telephone calls and other intrusive communications. However, neither of these prior art approaches addresses the issue of interaction with presentational applications such as described above.

### Summary of the Invention

According to an aspect of the invention, a system and method are provided for mediating a user's attention between multiple presentational media. In one embodiment, a streaming media manager is provided for controlling operation of a streaming media application in response to notifications from one or more of a context aware call processing system, such as set forth in US Patent Publication 2005/0100157, an email system or other notification system. Upon receipt of such notification of an imminent interruption of the user (e.g. ringing the user's telephone call, incoming email alert, etc.) the streaming media manager causes the streaming media application either to stop immediately so that the user can resume play from the point of stoppage or store a bookmark at the place of stoppage so that the user can easily locate and resume play from that point.

### Brief Description of the Drawings

Embodiments of the present invention will now be described, by way of example only, with reference to the attached Figures, wherein:

FIG. 1 is a block diagram of a hardware implementation of a context aware call processing system in connection with which an embodiment of the invention operates;

FIG. 2 shows the system architecture and module interactions for the system of FIG. 1;

FIG. 3 is a class diagram for the server modules of FIG. 2;

FIG. 4 is a class diagram for the client modules of FIG. 2;

FIG. 5 is a block diagram of a system according to a preferred embodiment of the invention; and

FIG. 6 is a flowchart showing steps of a method of operating the system of FIG. 5, according to the preferred embodiment.

### Detailed Description of the Invention

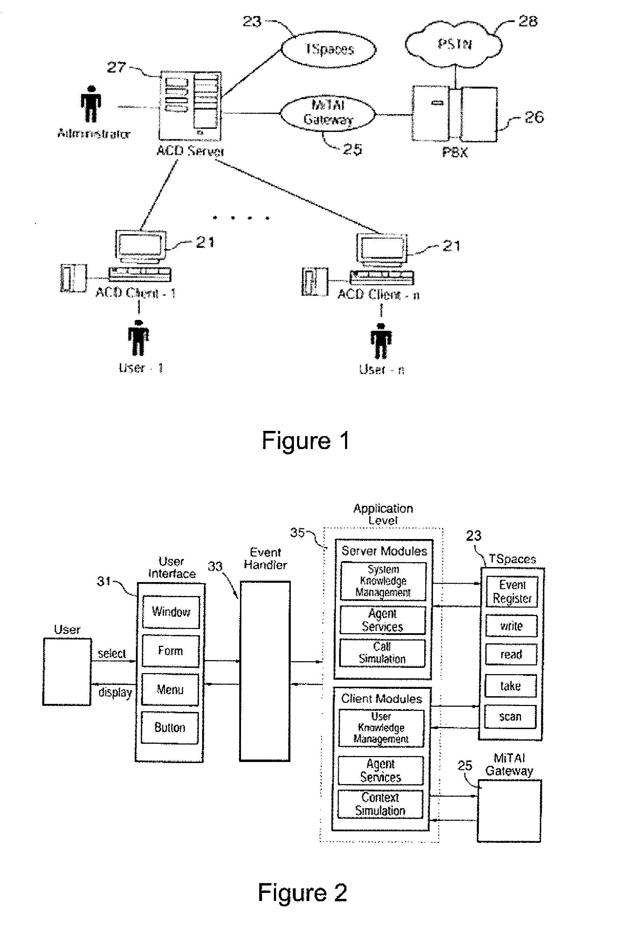

Reference is first made to FIG. 1 showing a context aware call processing system in accordance with US Patent Publication 2005/0100157, the contents of which are incorporated herein by reference.

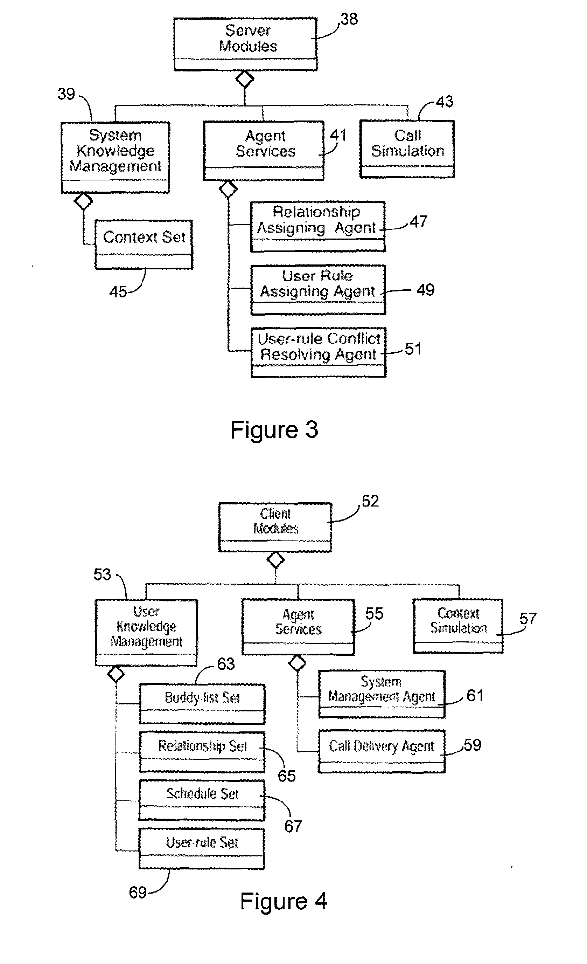

The system of FIG. 1 is based on a client-server architecture. An Active Call Delivery (ACD) client 21 communicates with an ACD server 27 which, in turn, communicates with TSpaces server 23 and a MiTAI Gateway server 25. MiTAI Gateway server 25 provides access via a PBX 26 to the PSTN 28. ACD server 27 is a single server or multiple servers having access to the TSpaces server 23. The ACD server 27 consists of user interfaces and a collection of "system agents" discussed in greater detail below with reference to FIG. 3. The user interfaces provide an introduction window, a login window for a system administrator, a context window for managing a hierarchy of contexts and a call simulation window for simulating a phone call. Each system agent contributes to call processing and has its own responsibilities: a Relationship Assigning (RA) agent is responsible for acquiring the relationship between a caller and a called party, and assigning it to a relevant data field for call processing. A User Rule Assigning (URA) agent is responsible for extracting all of the matching user rules according to the conditions of each rule and the current context, and assigning them to a relevant data field for call processing. A User-rule Conflict Resolving (UCR) agent is responsible for resolving any conflict that might be present in the assigned rules. As indicated above, these agents do not have to be installed on a particular machine, but can be distributed over a network of machines, which have access to the TSpaces server 23.

The ACD client 21 consists of user interfaces and user agents. The user interfaces provide an introduction window, a login window for a registered system user, and a registration window for a new user. Knowledge management is an important part of the user interface on the client system. A user can create or manage personal information such as a buddy list, relationship information, a schedule and a user preference rule. The client server utilizes two types of agents, discussed in greater detail below with reference to FIG. 4: The Call Delivery (CD) agent and the System Management (SM) agent. The CD agent acknowledges events, which are generated by a Call Monitor, in the Tspaces server 23. The Call Monitor is a direct interface with the MiTAI Gateway 25, and creates an event that is fed into the TSpaces server 23 for starting call processing by the CD agent. Next, the SM agent acknowledges the event from the CD agent, and distributes the call processing to agents on the network. Although each agent has distinct services, both the server and the client have certain common modules as per customary object-oriented design. These common object modules and the other modules are explained below.

FIG. 2 shows the system architecture and module interactions for the context aware call processing system of FIG. 1. The user interface 31 consists of windows, forms, menus and buttons for providing user login, registration, user preference rule setting, context simulation, and a display of messages for assisting the user.

The Event Handler subsystem 33 is a monitoring daemon that resides between the user interface 31 and the Application Level subsystem 35. It waits for physical events to arrive from the user interface 31, such as mouse clicks, and directs them to the appropriate application module. The development tool, Java, provides embedded event handlers, such as ActionListener, for this purpose.

The Application Level 35 is the core of the system. It consists of multiple agents that provide services for a client as well as for a server. All of the system transactions, functionalities, and knowledge management are performed within this subsystem.

As shown in the class diagram of FIG. 3, the server modules 38 are divided into three major parts: System Knowledge Management 39, Agent Services 41 and Call Simulation 43. The System Knowledge Management module 39 includes a Context Set sub-module 45 to allow an authorized administrator to create or modify a context hierarchy such as location and activity. The Agent Services module 41 consists of three distinct agent modules: The Relationship Assigning (RA) agent 47, the User Rule Assigning (URA) agent 49, and the User-rule Conflict Resolving (UCR) agent 51. In order to give flexible implementation of the agents, status of the agents is managed in order to know their availability. Network connectivity may affect their availability. Therefore, both an agent and the connection between the agent and the system's TSpaces 23 must be functional in order to use the agent. The system acquires an agent's status by examining a corresponding status tuple in the TSpaces 23. The status tuple consists of "name", "priority" and "availability" fields. Each agent is responsible for updating its status tuple in the TSpaces 23. The procedures for updating a status tuple consist of taking the status tuple and rewriting it with new status information preferably once per second. A tuple can be set to expire after a predetermined time. Upon expiration, the TSpaces server 23 removes the tuple from the TSpaces 23. The expiration time for a status tuple is preferably three seconds, so if an agent fails to update the tuple three times consecutively for any reason, there will be no status tuple for the corresponding agent in the TSpaces 23. The system assumes that an agent is abnormal if there is no status tuple for the agent, or if the "availability" field in the status tuple is set as "abnormal". The time gap between the one-second it takes to update the status tuple and the three seconds allowed before the status tuple expires may prevent unnecessary status toggling by temporal network disturbance.

Each agent is also responsible for registering an event into the TSpaces 23 to communicate with client machines. Whenever an awaited tuple is written into the tuple space, the TSpaces server 23 notifies this to an agent that registered the event. Generating an event and getting notification of the event from the TSpaces 23 forms a two-way communication-acknowledgement between agents.

The Relationship Assigning (RA) agent 47 is responsible for responding to a relationship-assigning request from a client's System Management (SM) agent, discussed below with reference to FIG. 4. The request from a SM agent contains caller and receiver information. The RA agent 47 assigns the relationship between the user and the caller according to the user's buddy-list.

The User Rule Assigning (URA) agent 49 is responsible for responding to a user-rule-assigning request from a client's SM agent. Upon request, the URA agent 49 retrieves both the relationship information and the user's current contexts. The relationship information is a relationship between the caller and the called party or receiver, set by the RA agent 47. The user's current contexts are the user's location, the current time with the user's schedule, and the user's activity.

The User-rule Conflict Resolving (UCR) agent 51 is responsible for responding to a client's SM agent user-rule conflict-resolving request. The request contains user rule information that is assigned by the URA agent 49. The UCR agent 51 selects one rule that is the most specific among the assigned rules. The more conditions a rule has, the more specific a rule is considered to be. The Call Simulation service 43 is provided for testing without connecting to MiTAI Gateway 25. A window with a form serves this functionality.

As shown in the client module class diagram of FIG. 4, the client modules are divided into three subsystems: User Knowledge Management 53, Agent Services 55, and Context Simulation 57. A user can manipulate personal knowledge through the User Knowledge Management module 53.

The Call Delivery (CD) agent 59 is responsible for communication with the phone switch or PBX 26 through MiTAl Gateway 25. In particular, the CD agent 59 registers events to MiTAI Gateway 25 and waits for notification of an incoming call for a user. When the notification arrives, the CD agent 59 sends a request to the SM agent 61 for further processing and waits for response. This response from the SM agent 61 contains an action to be taken as a result of an entire call processing. The CD agent 59 is then responsible for requesting the selected action to the MiTAI Gateway 25.

The System Management (SM) agent 61 is responsible for managing other agents' status and sequencing call processing according to the system agents' priority. When the CD agent 59 requests call processing, the SM agent 61 scans the agents' status tuples in the TSpaces 23 and makes a sequence table according to their priority. It sends a processing request to the highest-priority-agent, waits for a response and then sends it to the next-highest-priority-agent. When the SM agent 61 receives a response from the lowest-priority-agent, it sends an information tuple back to the CD agent 59.

The Context Simulation module 57 serves as a context agent that dynamically detects, interprets and updates the user's current contexts. A Context Simulation window includes all of the possible contexts, which are set by a system administrator, and a user selects from them.

The User Knowledge Management subsystem 53 permits the user to establish and maintain a Buddy-list Set 63, a Relationship Set 65, a Schedule Set 67 and User-rule Set 69.

TSpaces 23 (i.e. tuple spaces), are implemented in one or more servers 23 as a network communication buffer with database capabilities. A more complete description of TSpaces 23 may be found in US pending Patent Publication No. 2006/0242256 entitled Processing by Use of Synchronized Tuple Spaces and Assertions, by Gray et al., the contents of which are incorporated herein by reference. TSpaces 23 enable communication between applications and devices in a network of heterogeneous computers and operating systems. TSpaces 23 provides group communication services, database services, URL-based file transfer services, and event notification services. The TSpaces 23 are implemented in the Java programming language and thus automatically possess network ubiquity through platform independence, as well as a standard type of representation for all data types. The TSpaces system is appropriate for any application that has distribution or data storage requirements. It can perform many of the duties of a relational database system without imposing an overly restrictive (and primitive) type system, a rigid schema, a clumsy user interface or a severe runtime memory requirement. In the present invention, the TSpaces Server 23 is the medium between the system and user knowledge stores. However, it will be understood that Tspaces 23 may be replaced by a relational database or other shared database providing equivalent functionality for managing knowledge transactions, including read, write, update, take and scan, as well as event handling, such as registration and notification of events.

The MiTAI Gateway 25 facilitates communication to MITEL^{®} telephony servers (e.g. PBX 26) for processes that are not based on the "C" development language. The MiTAI Gateway 25 is a Windows^{®}-based process that can be executed on any Windows platform. It can manage a single socket connection from any other process on a network and it supports a limited session protocol. The MiTAl Gateway Server 25 is the intermediate system between the PBX 26 and the ACD's Application Level subsystem 35. The Application Level subsystem 35 registers an event to the MiTAI Gateway server 25 for the purpose of monitoring incoming calls.

In terms of system topology, the User Interface 31 is built on a Windows^{®} platform, and it interacts with the Application Level 35 through an Event Handler 33. The Application Level 35 subsystems use TSpaces server 23 as the medium for communication and for accessing the System Knowledge Management of the server and clients.

All of the knowledge, which includes user information, user rules, the user's current context information, and call information, is stored in the TSpaces 23. The unit of storage is a tuple, as set forth in the references cited above.

The system disclosed in FIGS. 1 - 4 and US20050100157 (Mitel 544) is illustrative of but one embodiment of notification system capable of use in implementation of the present invention and is not intended to limit the scope of application of the present invention, as discussed in greater detail below and as proscribed by the appended claims.

In operation, PBX 26 handles incoming calls, including multimedia calls. Thus, a call for a specific user (e.g. User-1 in FIG. 1) is reported by the PBX 26 to the Call Delivery Agent 59 which places an assertion about the call into the Tspaces tuple space 23. The System Management Agent 61 handles the sequencing of behavior in the system. Relationship Assigning Agent (RAA) 47 collects information about the call and information from other sources about the user's role and relationships so as to fit the incoming all within the user's contexts. For example, if the CDA 59 places an assertion that the incoming call is from a specific telephone number (e.g. based on caller ID information), the RRA 47 can determine that the telephone number is, for example, that of User-n in FIG. 1 and that User-n is both a colleague of and is working on a project with User-1. The RRA 47 places all of this information as assertions into the tuple space 23. Context agents, such as Context Simulation module 57, place various assertions about the current activities of User-1 (e.g. location, any document that he/she is working on, etc) into the tuple space 23. Various policies established by User-1 using his/her User Interface 31 determine how the call should be handled in various contexts. These polices are assessed by the User-rule Assigning Agent (UAA) 49 in terms of the information about the call and the user's current context, as stored in the tuple space 23. It is common for multiple policies to be applicable to any one context. Therefore, the User-rule Conflict Resolving Agent 51 determines the most appropriate policy and reports it to the Call Delivery Agent 59. The CDA 59 then instructs the PBX 26 to process the call in accordance with the appropriate policy (e.g. forwarding the call to User-1's telephone causing it to ring, thereby disturbing User-1's attention).

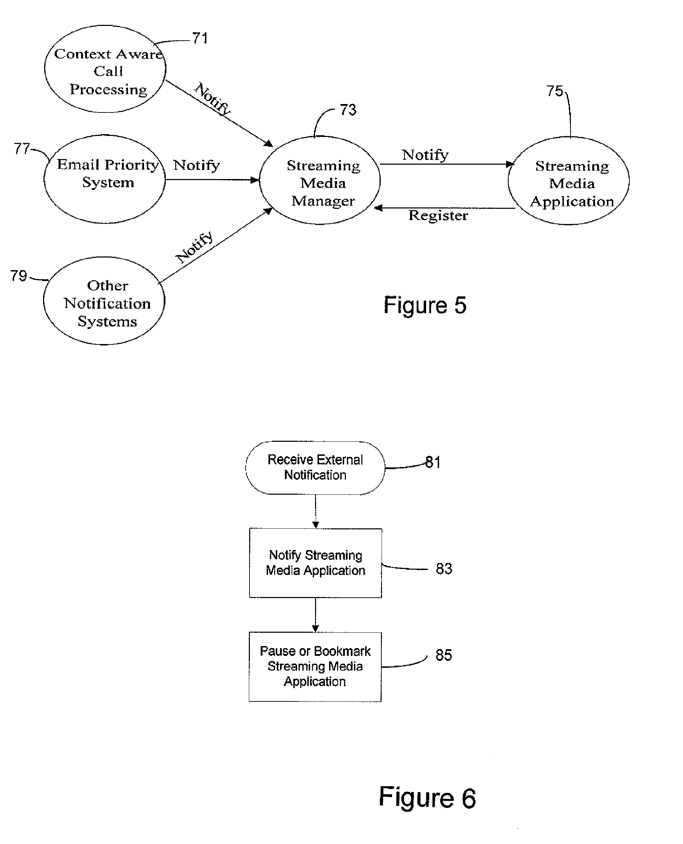

Referring now to FIGS. 5 and 6, a block diagram and flow chart are shown, respectively, of an embodiment of the present invention. The context aware call handling system 71 can, for example, be as set forth in FIGS. 1-4, wherein CDA 59 is programmed to send a notification (step 81) to a Streaming Media Manager 73 (SMM) when the PBX 26 is instructed to perform an activity that will ring the user's telephone or otherwise interrupt his/her attention. The SMM 73 may reside on ACD server 27, or elsewhere within the network. Upon receipt of the notification, SMM 73 notifies a Streaming Media Application 75 of this event (step 83). The SMA 75 preferably, but not necessarily, resides on client 21. Since SMM 73 must be aware of the media applications running on behalf of the user, the SMA 75 preferably registers with SMM 73 on start-up. However, other methods may be used, such as having the user or an administrator program the SMM 73 to recognize SMA 75.

In response to receipt of notification from the SMM 73, SMA 75 either immediately pauses streaming of the presentation or stores a bookmark so that the user can restart the presentation from the time when the notification was delivered (step 85).

Therefore, in accordance with the present invention events such as telephone call alerting (e.g. ringing) that may interrupt the user's attention are coupled with the user's streaming media application 75 in a way that ameliorates the disturbance to his/her attention.

As shown in FIG. 5, other systems, which are capable of disturbing user attention, can be coupled to the SMM 73. These include Email systems 77 that alert the user to important incoming Emails, or other systems that provide user notifications, such as personal diary systems, presence systems (e.g. for alerting users of visitor arrival, etc.)

Other embodiments are contemplated wherein, for example, the SMM 73 is coupled to one or more legacy streaming media applications by emulating the type of control that the application expects. For example, the SMM 73 may emulate a button push on a controller for a streaming application. Also, it is contemplated that the SMM 73 need not be implemented as a discrete entity but may be incorporated into each of the notification systems 71, 77 and/or 79. The assessment of priority or importance of a communication attempt need not be undertaken prior to generation of the notification, such that all communication attempts are reported to the SMM 73. The SMM 73 may not push notifications to the SMA 75 but rather the SMA 75 may poll or otherwise pull information from the SMM 73. The SMA 75 may be incorporated directly into PBX 26 or reside within client 21, as indicated above.

Note that although the examples discussed above relate to network based sources of media, a person of ordinary skill in the art will appreciate that the media referred to herein may include local sources. For example, an MP3 file of a recording of music or of a meeting can be downloaded to a local storage device (e.g. the hard disk of client PC 21) and played locally. The system and method according to this invention may be applied equally to media that is sourced externally from the network or locally from a computer or other device. Additionally, it should be noted that this invention applies to local or networked presentation of audio from CDs, MP3 players or other formats.

Other embodiments of the invention are possible within the scope of the invention as defined by the claims appended hereto.

## Claims

1. A method for mediating a user's attention between multiple media, comprising:
providing said user with a stream of media;
receiving a notification of an interruption; and
one of either automatically pausing or bookmarking said stream of media to facilitate continuation of said stream of media after said interruption.

2. The method of claim 1, wherein said interruption comprises ringing a telephone.

3. The method of claim 1, wherein said interruption comprises an incoming email.

4. The method of claim 1, wherein said interruption comprises a personal diary reminder.

5. The method of claim 1, wherein said interruption comprises a meeting reminder.

6. The method of claim 1, wherein said interruption comprises a visitor notification.

7. The method of claim 1, wherein providing said user with a stream of media comprises streaming said media from the Internet.

8. The method of claim 1, wherein providing said user with a stream of media comprises extracting said media from an email and launching a player for presentation of said media.

9. A system for mediating a user's attention between multiple media, comprising:
a streaming media application for providing said user with a stream of media;
a notification system for generating a notification of an interruption; and
a streaming media manager for receiving said notification and in response causing said streaming media application to one of either automatically pause or bookmark said stream of media to facilitate continuation of said stream of media after said interruption.

10. The system of claim 9, wherein said notification system comprises a context aware call processing system.

11. The system of claim 9, wherein said notification system comprises an email system.

12. The system of claim 9, wherein said notification system comprises a personal diary system.

13. The system of claim 9, wherein said notification system comprises a presence system for alerting said user of a visitor arrival.

14. The system of claim 9, wherein said streaming media application is a legacy streaming media application and said streaming media manager emulates a control input thereof.

15. The system of claim 14, wherein said streaming media manager emulates a button push on a controller for said legacy streaming application.

16. The system of claim 9, wherein said streaming media manager and said notification system are integrated.

17. The system of claim 9, wherein said streaming media manager causes said streaming media application to one of either automatically pause or bookmark said stream of media by pushing a further notification to said streaming media.

18. The system of claim 9, wherein said streaming media manager causes said streaming media application to one of either automatically pause or bookmark said stream of media by providing a further notification that is pulled by said streaming media.

19. The system of claim 9, wherein said streaming media application, said notification system and said streaming media manager are implemented within a PBX.

20. The system of claim 9, wherein said streaming media application receives said media from a network source.

21. The system of claim 9, wherein said streaming media application receives said media from a local source.

22. The system of claim 9, wherein said media is audio.

23. The system of claim 9, wherein said media is visual.

24. The system of claim 9, wherein said media is audio-visual.

25. The system of claim 9, wherein said media is music.
